# EUROPEAN PATENT SPECIFICATION

(11) **EP 0 803 672 B1**
(45) Date of publication and mention of the grant of the patent: **22.03.2000**
(21) Application number: 97106152.8
(22) Date of filing: 15.04.1997
(51) Int. Cl.: F16K 27/06

(54) **Fluid valve**
Fluidventil
Soupape pour fluides

(30) Priority: 23.04.1996 IT TO960092 U
(43) Date of publication of application: 29.10.1997
(73) Proprietor: FERRERO RUBINETTERIE SNC DI RICCARDO FERRERO & C., I-12060 Farigliano/Cuneo (IT)
(72) Inventor: Ferrero, Riccardo, 12060 Farigliano (CN) (IT)
(74) Representative: Robba, Pierpaolo

(56) References cited:
- DE-A- 2 755 121
- DE-U- 7 905 069
- DE-U- 8 010 883

## Description

The present invention refers to a fluid valve.

More particularly, it refers to a fluid valve of the ball type used in hydraulic circuits or for civil and industrial gases.

It is known to use ball valves to shut off fluid flow, like water or gas flow, in civil and industrial circuits.

It is known as well to use pipes made of metal or plastic material, such as PVC, Polyethylene, etc., to supply water, gas, etc. to various users.

Ball valves of the known type and generally valves for the above uses are made of metal, usually brass or bronze, or of plastic material.

Metal valves are used when there are metal pipes, while valves made of plastic material are used in case of pipes made of plastic material.

One of the inconveniences of the valves made of plastic material, however, is that they are brittle and do not guarantee enough seal. They can be further subjected to distortions generated by the temperature of the fluid flowing into the circuit in which these valves are inserted.

In order to solve such inconveniences, metal valves are used also in case of pipes made of plastic material.

In order to be able to use metal valves also with pipes made of plastic materials, it is however necessary to provide a suitable threaded adapter sleeve that allows locking the smooth plastic pipe end against the sleeve and that can be screwed to the metal valve body.

A first example of a metal valve adapted for the connection with a plastic pipe is described in document DE 80 10 883 U.

DE 80 10 883 U describes a valve comprising an hollow body, having closure means controllable from outside the body, divided in two branches. One of said branches has an increased-section end portion, internally threaded, adapted to receive an elastic ring, a circular insert, a toothed sleeve, and an externally threaded ring nut. The external surface of the toothed sleeve is inclined outwards while the internal surface of the ring nut is complementary shaped so that, when the ring nut is screwed into the end portion of the valve, the toothed sleeve is pressed against the plastic pipe locking it in position. Contemporaneously the elastic ring is partially compressed by the circular insert providing a liquid-proof sealing between the pipe and the valve.

Another valve suitable for the connection with a plastic pipe is described in document DE 79 05 069 U. In particular one branch of the valve comprises elements for locking a free end of a non-rigid or rubber pipe. A first annular rigid element, having a conical external surface, in inserted into the free end of the pipe, so that a circular sleeve can be used for locking the free end of the pipe on the internal annular element, by means of a ring nut screwed onto a threaded external surface of the branch.

Object of the present invention is providing a solution to the problem of reducing costs connected to the use of metal valves in circuits realized with pipes made of plastic material.

Another object of the present invention is providing a valve that can be directly assembled onto mixed circuits, that is, circuits including plastic pipes and metal pipes.

This object of the present invention is obtained by the fluid valve as claimed in claim 1.

Further objects of the invention are obtained by the fluid valve as claimed in the sub-claims.

Further features and advantages of the invention will be better clarified by the description of the valve shown in the enclosed drawings, in which:

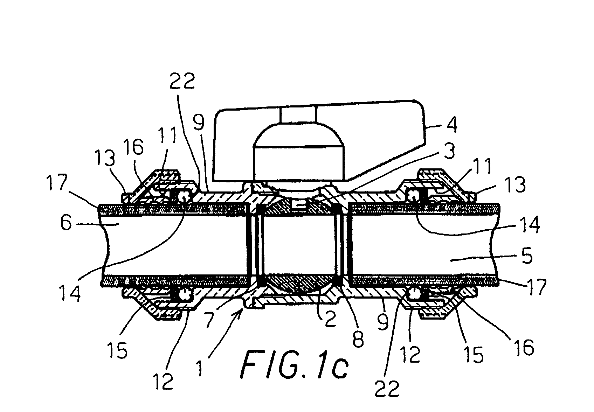

Figure 1a is a sectional view of a first valve realized according to the invention;

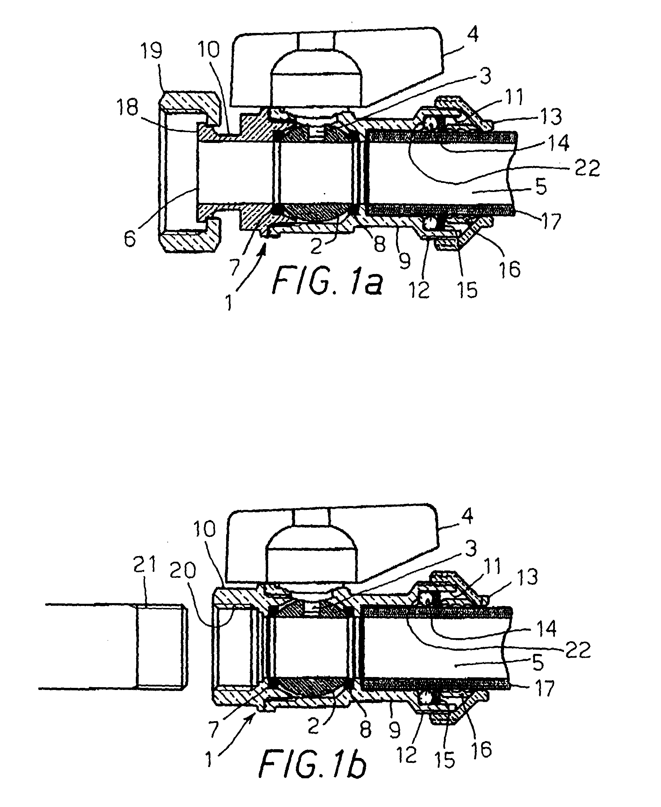

Figure 1b is a sectional view of a second valve realized according to the invention;
Figure 1c is a sectional view of a third valve realized according to the invention.

Figure 1a shows a first valve realized according to the invention comprising a valve body 1, preferably made of brass or bronze, that is substantially cylindrical and axially drilled, wherein a valve ball 2 is housed.

The valve ball 2 is connected, through a tree 3, to a control lever 4 located externally with respect to the body 1.

Through the control lever 4, the valve ball 2 can be rotated in such a way as to leave free, or lock, the fluid flow inside the valve body 1 between fluid inlet and outlet openings 5 and 6.

Between valve ball 2 and valve body 1, sealing rings 7 and 8 are further provided between which the ball 2 rotates.

The body valve 1 is thus divided by the valve ball 2 into two fluid inlet and outlet branches 9 and 10, ending in fluid inlet and outlet openings 5 and 6.

Next to the associated opening 5, the branch 9 provides an increased-section portion 11 externally equipped with a threading 12 suitable to allow screwing a substantially frustoconical, internally threaded ring nut 13.

Inside the portion 11 an elastic ring 14 is further provided, that is radially deformable when biased by a circular insert 15, which in turn is pressed by a toothed sleeve 16 when screwing the ring nut 13 onto the valve body 1, against the ledge 22 composed of the transition between the increased end portion 11 of the branch 9 and the branch 9.

The radial distortion of the elastic ring 14 allows locking the branch 9 of the valve body 1 of the free end of the pipe 17 that is inserted into the branch 9 of the valve body 1.

The sleeve 16 generally provides a skewed axial cut-out to allow clamping the teeth on the plastic pipe when the ring nut 13 is screwed onto the valve body 1.

Moreover, when plastic pipes are used for the passage of gas, it is provided to insert, inside the free end of the plastic pipe 17 that is inserted into the branch 9 of the valve body 1, a stiffening metal tubular terminal, not shown.

The opposite branch 10 of the valve body 1 shown in Figure 1a has at the end thereof an external circular edge 18 that holds a threaded nut 19 suitable to allow coupling the valve body 1 to a metal sleeve, for example a flow-meter, not shown.

The configuration shown in Figure 1a is particularly useful in case the valve must be interposed between pipes 17 made of plastic material, for example PVC, Polyethylene, etc. and metal fittings which devices like pumps, meters, etc. are equipped with.

Figure 1b shows a second valve realized according to the invention wherein the branch 10 provides at the free end thereof a threading 20 that allows screwing a threaded pipe 21.

The configuration shown in Figure 1b is particularly useful in case the valve must be interposed between pipes 17 made of plastic material, for example PVC, Polyethylene, etc. and threaded metal pipe 21 which the traditional hydraulic or gas circuits are equipped with.

Figure 1c shows a third valve realized according to the invention wherein both branches 9 and 10 are equipped with a portion having an increased section as already shown in Figure 1.

The configuration shown in Figure 1c is particularly useful in case the valve must be interposed between two pipes 17 made of plastic material, for example PVC, Polyethylene, etc.

All the above-described configurations show the common feature of integrating within the valve body, made of brass or bronze, the necessary means for locking at least one pipe made of plastic material.

Coupling of the pipe made of plastic material with the valve realized according to the invention can therefore occur without external adapter joints, with following economic and assembly time savings and with a lower risk of fluid leakages.

Further advantages of the invention are obtained because the threading 12, provided on the body 1 to screw the ring nut 13, remains protected against external agents by the ring nut 13 itself when assembled.

## Claims

1. Fluid valve comprising a substantially cylindrical hollow body (1), wherein closure means (2) are housed, said closure means (2) being adapted to be controlled from outside the body (1), said closure means (2) dividing the body (1) into two hollow branches (9, 10), said branches (9, 10) acting as fluid inlet and outlet from the body (1), at least one (9) of said hollow branches having an end portion (11) having an increased internal section, said increased-section portion (11) being adapted to receive internally an elastic ring (14), a circular insert (15) and a sleeve (16), and externally a substantially frustoconical threaded ring nut (13), for locking the free end of a plastic pipe, said elastic ring (14) being radially deformable when biased by the sleeve (16) through the circular insert (15) when screwing the frustoconical ring nut (13) onto the valve body (1), characterised in that the external surface of the sleeve (16) is parallel to the external surface of the pipe (17) and to the internal surface of the increased-section portion (11), whereby the force impressed by the frustoconical ring nut (13) is entirely transmitted, by means of the sleeve (16) and the circular insert (15), to the elastic ring (14) so that the pipe (17) is locked into the hollow branch (9) by the radial pressure of the compressed elastic ring (14).

2. Fluid valve according to claim 1, wherein a gap is provided between the external surface of the sleeve (16) and the internal surface of the increased-section portion (11).

3. Fluid valve according to claim 1 or 2, wherein said closure means adapted to be controlled from the outside are composed of a ball (2) for a ball valve.

4. Fluid valve according to claim 1 or 2, wherein at least one of said hollow branches (9, 10) has the free end thereof internally threaded.

5. Fluid valve according to claim 1 or 2, wherein one of said hollow branches (9, 10) has the free end equipped with an external edge suitable to hold an internally threaded fitting (19).

6. Fluid valve according to any of the preceding claims, wherein said body (1) is made of brass.

7. Fluid valve according to any of the claims 1 to 5, wherein said body (1) is made of bronze.

## Patentansprüche

1. Fluidventil mit einem im wesentlichen zylindrischen hohlen Körper (1) in welchem eine Verschlußeinrichtung (2) aufgenommen ist, die von außerhalb des Körpers (1) steuerbar ist,
- wobei die Verschlußeinrichtung (2) den Körper (1) in zwei hohle Zweigabschnitte (9, 10) aufteilt, die als Fluideinlaß und als Auslaß aus dem Körper (1) wirken,
- wobei wenigstens einer (9) der hohlen Zweigabschnitte einen Endteil (11) mit einem vergrößerten Innenquerschnitt hat,
- wobei der Abschnitt (11) mit dem vergrößerten Querschnitt innen für die Aufnahme eines elastischen Rings (14), eines kreisförmigen Einsatzes (15) und einer Hülse (16) und außen für die Aufnahme einer im wesentlichen kegelstumpfförmigen, mit Gewinde versehenen Ringmutter (13) zum Arretieren des freien Endes eines Kunststoffrohrs angepasst ist, und
- wobei der elastische Ring (14) radial veformbar ist, wenn er durch die Hülse (16) über den kreisförmigen Einsatz (15) vorgespannt wird, wenn die kegelstumpfförmige Ringmutter (13) auf den Ventilkörper (1) geschraubt wird,
dadurch gekennzeichnet,
- daß die Außenfläche der Hülse (16) parallel zur Außenfläche des Rohrs (17) und zur Innenfläche des Abschnitts (11) mit vergrößertem Querschnitt ist,
- wobei die durch die kegelstumpfförmige Ringmutter (13) ausgeübte Kraft vollständig mittels der Hülse (16) und des kreisförmigen Einsatzes (15) auf den elastischen Ring (14) übertragen wird, so daß das Rohr (17) in dem Zweigabschnitt (9) durch den Radialdruck des zusammengedrückten elastischen Rings (14) arretiert ist.

2. Fluidventil nach Anspruch 1, bei welchem ein Spalt zwischen der Außenfläche der Hülse (16) und der Innenfläche des Abschnitts (11) mit vergrößertem Querschnitt vorgesehen ist.

3. Fluidventil nach Anspruch 1 oder 2, bei welchem die Verschlußeinrichtung, die vor außen steuerbar ist, von einer Kugel (2) für ein Kugelvertil gebildet wird.

4. Fluidventil nach Anspruch 1 oder 2, bei welchem wenigstens einer der hohlen Zweigabschnitte (9,10) an seinem freien Ende mit einem Innengewinde versehen ist.

5. Fluidventil nach Anspruch 1 oder 2, bei welchem einer der hohlen Zweigabschnitte (9, 10) ein freies Ende hat, das mit einem Außenrand versehen ist, der für das Halten eines mit Innengewinde versehenen Anschlußstücks (19) geeignet ist.

6. Fluidventil nach einem der vorhergehenden Ansprüche, bei welchem der Körper (1) aus Messing hergestellt ist.

7. Fluidventil nach einem der Ansprüche 1 bis 5, bei welchem der Körper (1) aus Bronze hergestellt ist.

## Revendications

1. Valve pour fluide comprenant un corps creux (1) sensiblement cylindrique, dans lequel sont logés des moyens d'obturation (2), lesdits moyens d'obturation (2) étant aptes à être contrôlés de l'extérieur du corps (1), lesdits moyens d'obturation (2) divisant le corps (2) en deux branches creuses (9, 10), lesdites branches (9, 10) agissant comme entrée de fluide et comme sortie de fluide à partir du corps (1), au moins l'une (9) desdites branches creuses présentant une partie d'extrémité (11) ayant une section intérieure augmentée, ladite partie (11) à section intérieure augmentée étant apte à recevoir intérieurement une bague élastique (14), un insert circulaire (15) et un manchon (16), et extérieurement un écrou annulaire fileté (13) sensiblement tronconique, pour bloquer l'extrémité libre d'un tube en matière plastique, ladite bague élastique (14) étant radialement déformable lorsqu'elle est repoussée par le manchon (16) à travers l'insert circulaire (15) lorsque l'écrou annulaire tronconique (13) est vissé sur le corps de valve (1), caractérisé en ce que la surface extérieure du manchon (16) est parallèle à la surface extérieure du tube (17) et à la surface intérieure de la partie (11) à section augmentée, de telle manière que la force provoquée par l'écrou annulaire (13) soit entièrement transmise, par l'intermédiaire du manchon (16) et de l'insert circulaire (15), à la bague élastique (14) et que le tube (17) soit bloqué dans la branche creuse (9) par la pression radiale de la bague élastique (14) comprimée.

2. Valve pour fluide selon la revendication 1, dans laquelle un intervalle est prévu entre la surface extérieure du manchon (16) et la surface intérieure de la partie (11) à section augmentée.

3. Valve pour fluide selon la revendication 1 ou 2, dans laquelle lesdits moyens d'obturation aptes à être contrôlés de l'extérieur sont composés d'une bille ou sphère (2) pour un valve à tournant sphérique.

4. Valve pour fluide selon la revendication 1 ou 2, dans laquelle au moins l'une desdites branches creuses (9, 10) est pourvue d'un filetage intérieur à son extrémité libre.

5. Valve pour fluide selon la revendication 1 ou 2, dans laquelle l'une desdites branches creuses (9, 10) a l'extrémité libre équipée d'un bord extérieur approprié pour retenir un raccord (19) fileté intérieurement.

6. Valve pour fluide selon l'une quelconque des revendications précédentes, dans laquelle ledit corps (11) est réalisé en laiton.

7. Valve pour fluide selon l'une quelconque des revendications 1 à 5, dans laquelle ledit corps (1) est réalisé en bronze.
